# EUROPEAN PATENT APPLICATION

(11) **EP 3 087 883 A1**
(43) Date of publication of application: **02.11.2016**
(21) Application number: 16167601.0
(22) Date of filing: 29.04.2016
(51) Int. Cl.: A47J 42/28, A47J 42/38

(54) **GRINDER BLADE AND GRINDING DEVICE HAVING THE SAME**

(30) Priority: 30.04.2015 CN 201510216098
(71) Applicant: Tsann Kuen (Zhangzhou) Enterprise Co., Ltd., Fujian 363107 (CN)
(72) Inventor: LIN, Chieh-Wen, Fujian 363107 (CN)
(74) Representative: Regimbeau

(57) **Abstract**

A grinder blade includes a connecting blade body (5) extending in a horizontal direction (T), a first blade body (6) having a first inclined segment (61) that extends obliquely and downwardly from an end of the connecting blade body (5), a first horizontal segment (62) that extends horizontally from the first inclined segment (61), and a first bent segment (63) that extends obliquely and upwardly from the first horizontal segment (62), and a second blade body (7) having a second inclined segment (71) that extends obliquely and downwardly from an opposite end of the connecting blade body (5), a second horizontal segment (72) that extends horizontally from the second inclined segment (71), and a second bent segment (73) that extends obliquely and upwardly from the second horizontal segment (72).

## Description

The disclosure relates to a grinding device, and more particularly to a grinding device for grinding beans.

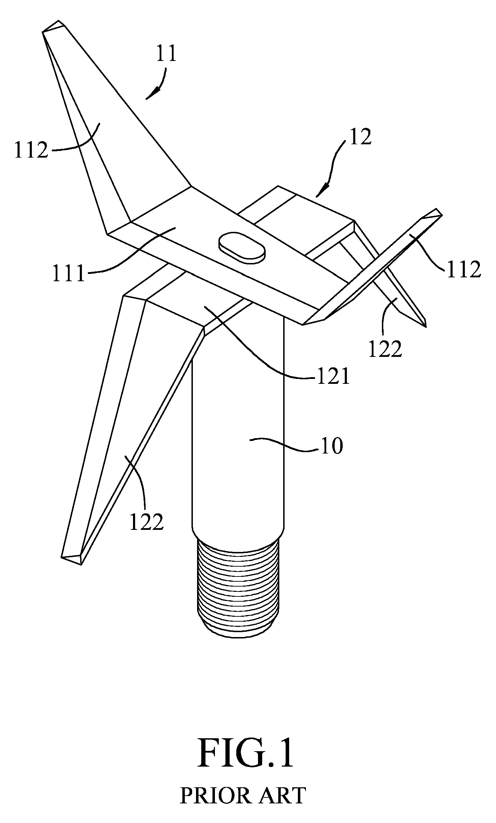

A conventional grinding device as shown in Figure 1, including a rotary shaft 10, a first grinder blade 11, and a second grinder blade 12. The first grinder blade 11 and the second grinder blade 12 are connected to the rotary shaft 10. The first grinder blade 11 has a first horizontal segment 111 extending horizontally, and two first bent segments 112 extending respectively, obliquely and upwardly from opposite two ends of the first horizontal segment 111. The second grinder blade 12 is disposed under the first grinder blade 11, and has a second horizontal segment 121 extending horizontally, and two second inclined segments 122 extending respectively, obliquely and downwardly from opposite two ends of the second horizontal segment 121. Since each of the first grinder blade 11 and the second grinder blade 12 has a simple structure and relatively low structural strength, the first grinder blade 11 and the second grinder blade 12 need to be replaced frequently. In addition, after beans are ground by the first grinder blade 11 and drop down, the second grinder blade 122 can generally only stir the dropped beans and cannot serve the function of both stirring and re-grinding the beans, such that some of the beans may not be well-ground after operation of the conventional grinding device.

Therefore, an object of the disclosure is to provide a grinder blade that can alleviate at least one of the drawbacks of the prior art.

According to the disclosure, the grinder blade is adapted to be coupled to and driven rotatably by a rotary shaft. The grinder includes a connecting blade body, a first blade body, and a second blade body. The connecting blade body extends in a horizontal direction and is adapted to be connected to the rotary shaft. The first blade body has a first inclined segment extending obliquely and downwardly from an end of the connecting blade body, a first horizontal segment extending horizontally from the first inclined segment, and a first bent segment extending obliquely and upwardly from the first horizontal segment. The second blade body has a second inclined segment extending obliquely and downwardly from an opposite end of the connecting blade body, a second horizontal segment extending horizontally from the second inclined segment, and a second bent segment extending obliquely and upwardly from the second horizontal segment.

Another object of the disclosure is to provide a grinding device that includes the abovementioned grinder blade.

According to the disclosure, the grinding device includes a container, a rotary shaft, and the abovementioned grinder blade. The container includes a bottom wall and a surrounding wall. The bottom wall has an outer peripheral portion, an inner portion that extends inwardly, upwardly and obliquely from the outer peripheral portion, and a passage-defining portion that extends downwardly from an inner edge of the inner portion and that defines a shaft passage . The surrounding wall extends upwardly from an outer edge of the outer peripheral portion of the bottom wall. The rotary shaft is retained rotatably in the shaft passage. The grinder blade is disposed over the bottom wall of the container.

Other features and advantages of the disclosure will become apparent in the following detailed description of the embodiments with reference to the accompanying drawings, of which:
Figure 1 is a perspective view of a conventional grinding device;
Figure 2 is a sectional view of a first embodiment of a grinding device according to the disclosure;
Figure 3 is a perspective view of a grinder blade of the first embodiment;
Figure 4 is a sectional view of the grinder blade;
Figure 5 is a top view of the grinder blade;
Figure 6 is a sectional view of the grinder blade taken along line VI-VI in Figure 5;
Figure 7 is a sectional view of the grinder blade taken along line VII-VII in Figure 5; and
Figure 8 is a sectional view of a grinder blade of a second embodiment of the grinding device according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

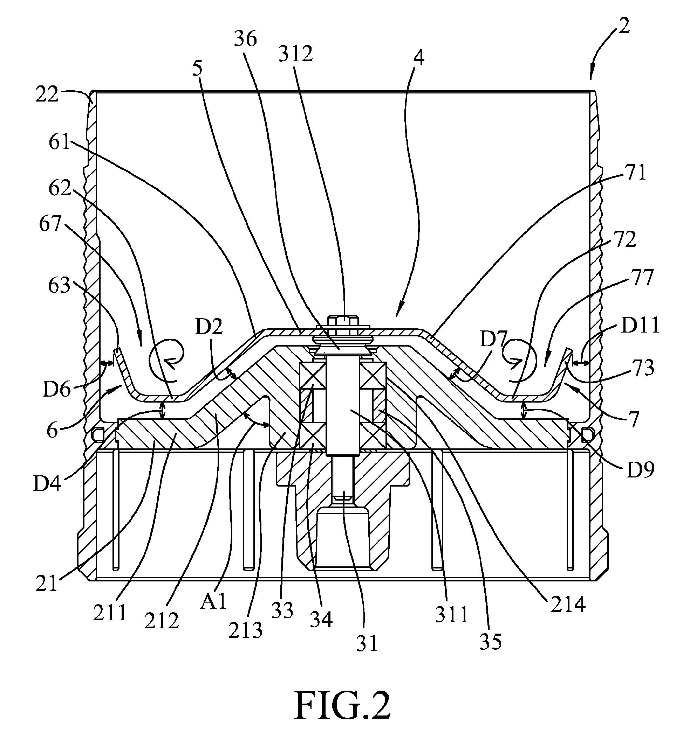

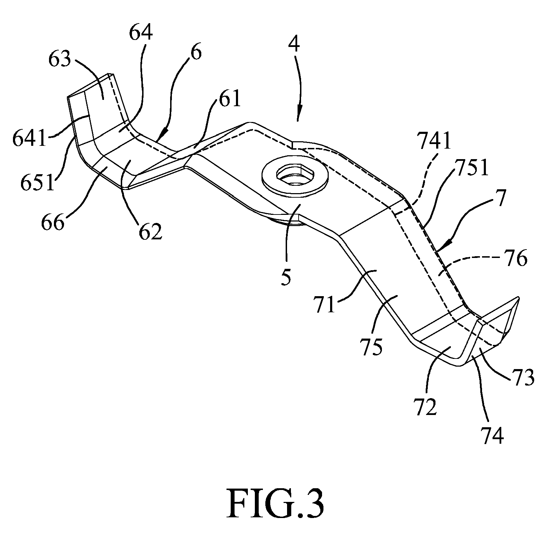

Referring to Figures 2 and 3, the first embodiment of a grinding device according to the disclosure is adapted to grind beans, and includes a container 2, a rotary shaft 31, an upper bearing 33, a lower bearing 34, a support block 35, a sealing ring 36, and a grinder blade 4.

The container 2 includes a bottom wall 21 having an outer peripheral portion 211, an inner portion 212 that extends inwardly, upwardly and obliquely from the outer peripheral portion 211, and a passage-defining portion 213 that extends downwardly from an inner edge of the inner portion 212 and that defines a shaft passage 214. The container 2 further includes a surrounding wall 22 that extends upwardly from an outer edge of the outer peripheral portion 211 of the bottom wall 21. An angle (A1) defined between the inner portion 212 and the passage-defining portion 213 ranges between 15 and 60 degrees. In this embodiment, the angle (A1) is 50 degrees.

The rotary shaft 31 has a shaft body 311 retained rotatably in the shaft passage 214 and coupled to the grinder blade 4, and a shaft head 312 connected to a top end of the shaft body 311.

The upper and lower bearings 33, 34 are disposed in the shaft passage 214, are spaced apart from each other, and are sleeved on the shaft body 311. The support block 35 is sleeved on the shaft body 311 and is interposed between the upper and lower bearings 33, 34. The sealing ring 36 is sleeved on the shaft body 311 and is disposed between the grinder blade 4 and the upper bearing 33.

In this embodiment, the rotary shaft 31 is driven rotatably by a motor (not shown) . The upper and lower bearings 33, 34 can prevent high temperature caused by excessive friction between the rotary shaft 31 and the passage-defining portion 213 when the rotary shaft 31 is rotated. The support block 35 can maintain a certain distance between the upper and lower bearings 33, 34. The sealing ring 36 can prevent ground beans from dropping into the shaft passage 214.

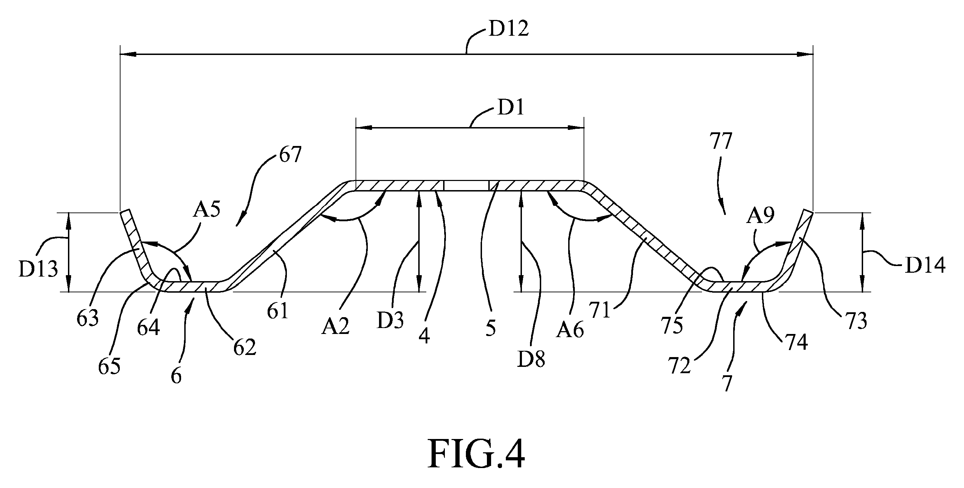

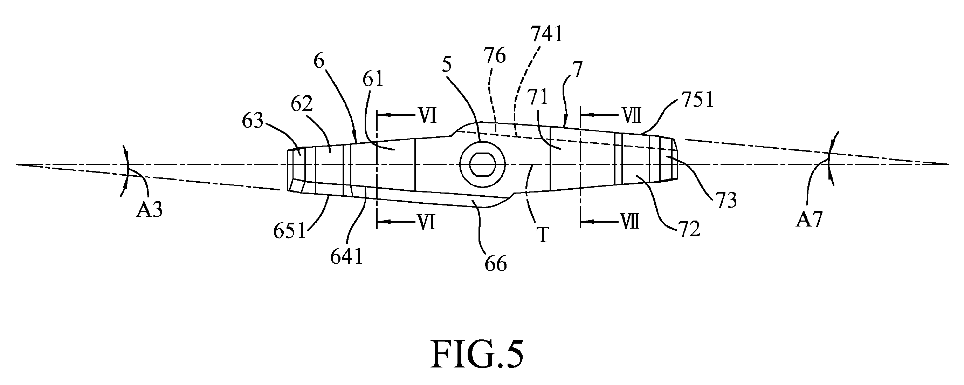

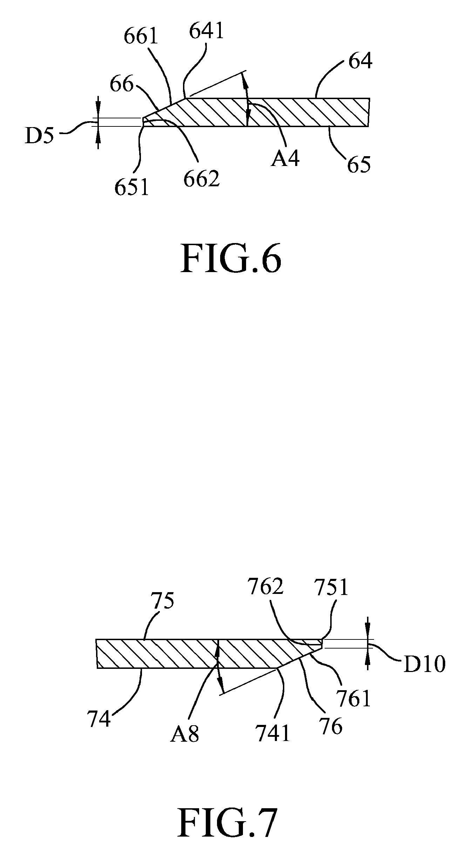

Referring to Figures 2, 4, 5, and 6, the grinder blade 4 is coupled to and driven rotatably by the rotary shaft 31, and is disposed over and spaced apart from the bottom wall 21 of the container 2 . The grinder blade 4 includes a connecting blade body 5, a first blade body 6, and a second blade body 7 . The connecting blade body 5 extends in a horizontal direction (T) and is connected to the rotary shaft 31. A length (D1) of the connecting blade body 5 in the horizontal direction (T) ranges between 15 and 35 millimeters. In this embodiment, the length (D1) is 22 millimeters.

The first blade body 6 has a first inclined segment 61 extending obliquely and downwardly from an end of the connecting blade body 5, a first horizontal segment 62 extending horizontally from the first inclined segment 61, and a first bent segment 63 extending obliquely and upwardly from the first horizontal segment 62.

An angle (A2) defined between the connecting blade body 5 and the first inclined segment 61 of the first blade body 61 ranges between 105 and 150 degrees. A distance (D2) between the first inclined segment 61 of the first blade body 6 and the inner portion 212 of the bottom wall 21 ranges between 2 and 6 millimeters. A distance (D3) between the connecting blade body 5 and an extension of the first horizontal segment 62 ranges between 2 and 25 millimeters. A distance (D4) between the first horizontal segment 62 of the first blade body 6 and the outer peripheral portion 211 of the bottom wall 21 ranges between 2 and 6 millimeters. In this embodiment, the angle (A2) is 140 degrees, the distance (D2) is 2.7 millimeters, the distance (D3) is 12.1 millimeters, and the distance (D4) is 2.15 millimeters.

The first blade body further has a first top surface 64, a first bottom surface 65, and a first chamfered surface 66. The first top surface 64 extends from the first inclined segment 61 to the first bent segment 63 through the first horizontal segment 62, and has a first inner edge 641. The first bottom surface 65 is disposed under the first top surface 64, extends from the first inclined segment 61 to the first bent segment 63 through the first horizontal segment 62, and has a first outer edge 651. The first inner edge 641 and the first outer edge 651 are respectively proximate to and distal from the rotary shaft 31. The first chamfered surface 66 is disposed between the first top surface 64 and the first bottom surface 65, and has a first inclined surface portion 661 connected to the first inner edge 641 and a first connecting surface portion 662 interconnecting the first inclined surface portion 661 and the first outer edge 651.

The first outer edge 651 extends in an extending direction which intersects the horizontal direction (T) , and an angle (A3) defined between the horizontal direction (T) and the extending direction is larger than 0 degrees and smaller than 10 degrees. With the design of the angle (A3), a length of the first outer edge 651 is increased to facilitate grinding of the beans, and the weight of the first blade body 6 is decreased, thereby preventing the first bent segment 63 from descending and scraping the container 2. An angle (A4) defined between an extension of the first inclined surface portion 661 and an extension of the first bottom surface 65 ranges between 15 and 25 degrees. If the angle (A4) is larger than 25 degrees, the first blade body 6 will not be sharp enough, and if the angle (A4) is smaller than 15 degrees, the first blade body 6 will be difficult to manufacture. The first connecting surface portion 662 has a width (D5) between the first outer edge 651 and the first inclined surface portion 661 which ranges between 0.2 and 0.5 millimeters. If the width (D5) is smaller than 0.2 millimeters, the first blade body 6 will have insufficient structural strength, and if the width (D5) is larger than 0.5 millimeter, the first blade body 6 will not be sharp enough. In this embodiment, the angle (A3) is 4 degrees, the angle (A4) is 19 degrees, and the width (D5) is 0.3 millimeters.

An angle (A5) defined between the first horizontal segment 62 and the first bent segment 63 ranges between 95 and 120 degrees. A minimum distance (D6) between the first bent segment 63 of the first blade body 6 and the surrounding wall 22 ranges between 1 and 6 millimeters. In this embodiment, the angle (A5) is 110 degrees, and the minimum distance (D6) is 2.2 millimeters. The first inclined segment 61, the first horizontal segment 62, and the first bent segment 63 cooperatively define a first grinding space 67 that opens upwardly.

As shown in Figures 2, 4, 5, and 7, the second blade body 7 has a second inclined segment 71 extending obliquely and downwardly from an opposite end of the connecting blade body 5, a second horizontal segment 72 extending horizontally from the second inclined segment 71, and a second bent segment 73 extending obliquely and upwardly from the second horizontal segment 72.

An angle (A6) defined between the connecting blade body 5 and the second inclined segment 71 of the second blade body 7 ranges between 105 and 150 degrees. A distance (D7) between the second inclined segment 71 of the second blade body 7 and the inner portion 212 of the bottom wall 21 ranges between 2 and 6 millimeters. In this embodiment, the angle (A6) is 140 degrees, and the distance (D7) is 2.7 millimeters.

A distance (D8) between the connecting blade body 5 and an extension of the second horizontal segment 72 ranges between 2 and 25 millimeters. A distance (D9) between the second horizontal segment 72 of the second blade body 7 and the outer peripheral portion 211 of the bottom wall 21 ranges between 2 and 6 millimeters. In this embodiment, the distance (D8) is 12.1 millimeters, and the distance (D9) is 2.15 millimeters.

The second blade body 7 further has a second top surface 75, a second bottom surface 74, and a second chamfered surface 76. The second top surface 75 extends from the second inclined segment 71 to the second bent segment 73 through the second horizontal segment 72, and has a second outer edge 751. The second bottom surface 74 is disposed under the second top surface 75, extends from the second inclined segment 71 to the second bent segment 73 through the second horizontal segment 72, and has a second inner edge 741. The second inner edge 741 and the second outer edge 751 are adapted to be respectively proximate to and distal from the rotary shaft 31. The second chamfered surface 76 is disposed between the second top surface 75 and the second bottom surface 74, and has a second inclined surface portion 761 connected to the second inner edge 741, and a second connecting surface portion 762 interconnecting the second inclined surface portion 761 and the second outer edge 751.

The second outer edge 751 extends in an extending direction which intersects the horizontal direction (T) , an angle (A7) defined between the horizontal direction (T) and the extending direction is larger than 0 degrees and smaller than 10 degrees. With the design of the angle (A7), a length of the second outer edge 751 is increased to facilitate grinding of the beans, and the weight of the secondblade body 7 is decreased to prevent the second bent segment 73 from descending and scraping the container 2. An angle (A8) defined between an extension of the second inclined surface portion 761 and an extension of the second top surface 75 ranges between 15 and 25 degrees. If the angle (A8) is larger than 25 degrees, the second blade body 7 will not be sharp enough, and if the angle (A8) is smaller than 15 degrees, the second blade body 7 will be difficult to manufacture. The second connecting surface portion 762 has a width (D10) between the second outer edge 751 and the second inclined surface portion 761 which ranges between 0.2 and 0.5 millimeters. If the width (D10) is smaller than 0.2 millimeters, the second blade body 7 will have insufficient structural strength, and if the width (D10) is larger than 0.5 millimeter, the second blade body 7 will not be sharp enough. In this embodiment, the angle (A7) is 4 degrees, the angle (A8) is 19 degrees, and the width (D10) is 0.3 millimeters.

An angle (A9) defined between the second horizontal segment 72 and the second bent segment 73 ranges between 95 and 120 degrees. A minimum distance (D11) between the second bent segment 73 of the second blade body 7 and the surrounding wall 22 ranges between 1 and 6 millimeters. A maximum distance (D12) in the horizontal direction (T) between the first bent segment 63 and the second bent segment 73 ranges between 50 and 90 millimeters. In this embodiment, the angle (A9) is 110 degrees, the minimum distance (D11) is 2.2 millimeters, and the maximum distance (D12) is 69.8 millimeters. The second inclined segment 71, the second horizontal segment 72, and the second bent segment 73 cooperatively define a second grinding space 77 that opens upwardly.

In operation, by virtue of the configuration of the first blade body 6 and the second blade body 7, the beans on the first inclined segment 61 and the second inclined segment 71 fall onto the first horizontal segment 62 and the secondhorizontal segment 72, then moved upwardly and outwardly to the first bent segment 63 and the second bent segment 73 by a centrifugal force, and finally fall back to the first horizontal segment 62 and the second horizontal segment 72. In such manner, the beans can remain in the first grinding space 67 and the second grinding space 77 for a relatively long time, and can be well-ground by the first blade body 6 and the second blade body 7.

It should be noted that, if the angle (A5) and the angle (A9) are smaller than 95 degrees, it will be hard for the beans to move upwardly to the first bent segment 63 and the second bent segment 73, and if the angle (A5) and the angle (A9) are larger than 120 degrees, the grinding effectiveness of the first bent segment 63 and the second bent segment 73 may be negatively affected since lengths of the first bent segment 63 and the second inclined segment 73 will have to be shortened to prevent the surrounding wall 22 of the container 2 from being hit by the first bent segment 63 and the second inclined segment 73. In addition, a distance (D13) between a top end of the first bent segment 63 and an extension of the first horizontal segment 62 ranges between 5 and 20 millimeters, and a distance (D14) between a top end of the second bent segment 73 and an extension of the second horizontal segment 72 ranges between 5 and 20 millimeters. In this embodiment, both the distance (D13) and the distance (D14) are 7.7 millimeters.

Referring back to Figures 2, 6, and 7, the configuration that the first chamfered surface 66 and the second chamfered surface 76 are formed on opposite sides of the grinder blade 4 provides two opposite forces that drive the beans to move in different directions during the bean-grinding process. In such manner, the beans can be gathered between the first blade body 6 and the second blade body 7 and be well-ground by the first chamfered surface 66 of the first blade body 6 and the second chamfered surface 76 of the second blade body 7. Therefore, the grinding efficiency is increased and the grinding time is shortened.

With the distances (D2, D4, D7, D9) and the minimum distances (D6, D11) specifically designed, the contours of an internal space of the container 2 fit with the shape of the grinder blade 4. In such manner, the beans can be effectively ground instead of accumulating somewhere in the internal space of the container 2, and collision between the grinder blade 4 and the container 2 can be prevented.

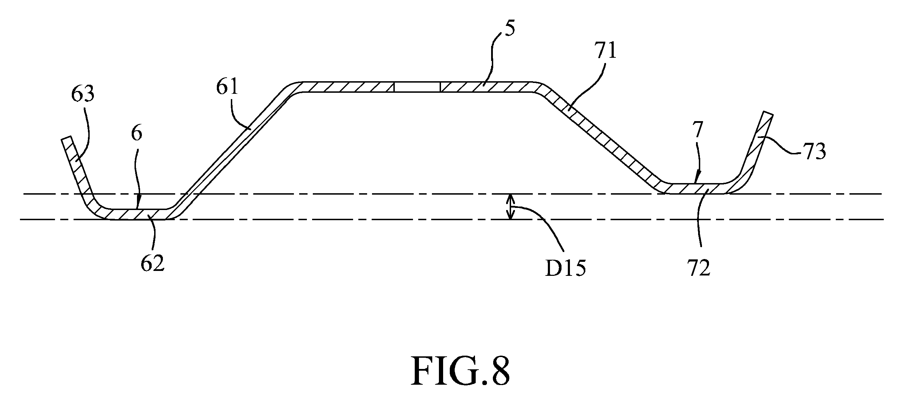

As shown in Figure 8, the second embodiment has a structure similar to that of the first embodiment. The main difference between this embodiment and the first embodiment resides in that the configuration of the first horizontal segment 62 of the first blade body 6 and the second horizontal segment 72 of the second blade body 7 are located at different height levels. A distance (D15) between an extension of the first horizontal segment 62 and an extension of the second horizontal segment 72 is not larger than 5 millimeters. In this embodiment, the distance (D15) is 2.5 millimeters. As the first horizontal segment 62 of the first blade body 6 and the second horizontal segment 72 of the second blade body 7 are located at different height levels, the beans can be ground at different height levels so as to ensure a better grinding effectiveness.

In conclusion, the W-shaped grinder blade 4 has an enhanced structural strength and can continually stir up the beans for a better grinding effectiveness. Moreover, since the contours of the internal space of the container 2 fit with the shape of the grinder blade 4, the grinding effectiveness is further enhanced and collision between the grinder blade 4 and the container 2 is prevented.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A grinder blade adapted to be coupled to and driven rotatably by a rotary shaft (31), including:
a connecting blade body (5) extending in a horizontal direction (T) and adapted to be connected to the rotary shaft (31);
a first blade body (6); and
a second blade body (7);
**characterized in that** said first blade body (6) has a first inclined segment (61) extending obliquely and downwardly from an end of said connecting blade body (5), a first horizontal segment (62) extending horizontally from said first inclined segment (61) , and a first bent segment (63) extending obliquely and upwardly from said first horizontal segment (62), and
said second blade body (7) having a second inclined segment (71) that extends obliquely and downwardly from an opposite end of said connecting blade body (5), a second horizontal segment (72) that extends horizontally from said second inclined segment (71), and a second bent segment (73) that extends obliquely and upwardly from said second horizontal segment (72) .

2. The grinder blade as claimed in Claim 1, further **characterized in that** said first blade body (6) has:
a first top surface (64) extending from said first inclined segment (61) to said first bent segment (63) through said first horizontal segment (62) , and having a first inner edge (641);
a first bottom surface (65) disposed under said first top surface (64), extending from said first inclined segment (61) to said first bent segment (63) through said first horizontal segment (62), and having a first outer edge (651), said first inner edge (641) and said first outer edge (651) being adapted to be respectively proximate to and distal from the rotary shaft (31) ; and
a first chamfered surface (66) disposed between said first top surface (64) and said first bottom surface (65), and having a first inclined surface portion (661) that is connected to said first inner edge (641), and a first connecting surface portion (662) that interconnects said first inclined surface portion (661) and said first outer edge (651).

3. The grinder blade as claimed in Claim 2, further **characterized in that**:
an angle (A4) defined between an extension of said first inclined surface portion (661) and an extension of said first bottom surface (65) ranges between 15 and 25 degrees;
said first connecting surface portion (662) has a width (D5) between said first outer edge (651) and said first inclined surface portion (661) which ranges between 0.2 and 0.5 millimeters; and
said first outer edge (651) extends in an extending direction which intersects the horizontal direction (T), an angle (A3) defined between the horizontal direction (T) and the extending direction being larger than 0 degrees and smaller than 10 degrees.

4. The grinder blade as claimed in any one of Claims 1 to 3, further **characterized in that** said second blade body (7) has:
a second top surface (75) extending from said second inclined segment (71) to said second bent segment (73) through said second horizontal segment (72), and having a second outer edge (751);
a second bottom surface (74) disposed under said second top surface (75), extending from said second inclined segment (71) to said second bent segment (73) through said second horizontal segment (72), and having a second inner edge (741), said second inner edge (741) and said second outer edge (751) being adapted to be respectively proximate to and distal from the rotary shaft (31); and
a second chamfered surface (76) disposed between said second top surface (75) and said second bottom surface (74), and having a second inclined surface portion (761) that is connected to said second inner edge (741), and a second connecting surface portion (762) that interconnects said second inclined surface portion (761) and said second outer edge (751).

5. The grinder blade as claimed in Claim 4, further **characterized in that**:
an angle (A8) defined between an extension of said second inclined surface portion (761) and an extension of said second top surface (75) ranges between 15 and 25 degrees;
said second connecting surface portion (762) has a width (D10) between said second outer edge (751) and said second inclined surface portion (761) which ranges between 0.2 and 0.5 millimeters; and
said second outer edge (751) extends in an extending direction which intersects the horizontal direction (T), an angle (A7) defined between the horizontal direction (T) and the extending direction being larger than 0 degrees and smaller than 10 degrees.

6. The grinder blade as claimed in any one of Claims 1 to 5, further **characterized in that**:
said first horizontal segment (62) of said first blade body (6) and said second horizontal segment (72) of said second blade body (7) are located at different height levels; and
a distance (D15) between an extension of said first horizontal segment (62) and an extension of said second horizontal segment (72) is not larger than 5 millimeters.

7. The grinder blade as claimed in any one of Claims 1 to 6, further **characterized in that**:
an angle (A5) defined between said first horizontal segment (62) and said first bent segment (63) ranges between 95 and 120 degrees;
a distance (D13) between a top end of said first bent segment (63) and an extension of said first horizontal segment (62) ranges between 5 and 20 millimeters;
an angle (A9) defined between said second horizontal segment (72) and said second bent segment (73) ranges between 95 and 120 degrees;
a distance (D14) between a top end of said second bent segment (73) and an extension of said second horizontal segment (72) ranges between 5 and 20 millimeters;
a maximum distance (D12) in the horizontal direction (T) between said first bent segment (63) and said second bent segment (73) ranges between 50 and 90 millimeters;
a length (D1) of said connecting blade body (5) in the horizontal direction (T) ranges between 15 and 35 millimeters;
a distance (D3) between said connecting blade body (5) and an extension of said first horizontal segment (62) ranges between 2 and 25 millimeters; and
a distance (D8) between said connecting blade body (5) and an extension of said second horizontal segment (72) ranges between 2 and 25 millimeters.

8. A grinding device including
a container (2), and
a rotary shaft (31),
**characterized in that**:
said container (2) includes
a bottom wall (21) having an outer peripheral portion (211), an inner portion (212) that extends inwardly, upwardly and obliquely from said outer peripheral portion (211), and a passage-defining portion (213) that extends downwardly from an inner edge of said inner portion (212) and that defines a shaft passage (214), and
a surrounding wall (22) extending upwardly from an outer edge of said outer peripheral portion (211) of said bottom wall (21);
said rotary shaft (31) is retained rotatably in said shaft passage (214); and
said grinding device further includes said grinder blade as claimed in claim 1 disposed over said bottom wall (21) of said container (2).

9. The grinding device as claimed in Claim 8, further **characterized in that**:
an angle (A1) defined between said inner portion (212) and said passage-defining portion (213) of said bottom wall (21) ranges between 15 and 60 degrees;
an angle (A2) defined between said connecting blade body (5) and said first inclined segment (61) of said first blade body (6) ranges between 105 and 150 degrees; and
an angle (A6) defined between said connecting blade body (5) and said second inclined segment (71) of said secondbladebody (7) ranges between 105 and 150 degrees.

10. The grinding device as claimed in any one of Claims 8 and 9, further **characterized in that**:
said rotary shaft (31) has a shaft body (311) retained rotatably in said shaft passage (214) and coupled to said grinder blade, and a shaft head (312) connected to a top end of said shaft body (311); and
said grinding device further comprises
upper and lower bearings (33, 34) disposed in said shaft passage (214), spaced apart from each other, and sleeved on said shaft body (311),
a support block (35) sleeved on said shaft body (311) and interposed between said upper and lower bearings (33, 34), and
a sealing ring (36) sleeved on said shaft body (311) and disposed between said grinder blade and said upper bearing (33).

11. The grinding device as claimed in any one of Claims 8 to 10, further **characterized in that**:
a distance (D2) between said first inclined segment (61) of said first blade body (6) and said inner portion (212) of said bottom wall (21) ranges between 2 and 6 millimeters;
a distance (D7) between said second inclined segment (71) of said second blade body (7) and said inner portion (212) of said bottom wall (21) ranges between 2 and 6 millimeters;
a distance (D4) between said first horizontal segment (62) of said first blade body (6) and said outer peripheral portion (211) of said bottom wall (21) ranges between 2 and 6 millimeters;
a distance (D9) between said second horizontal segment (72) of said second blade body (7) and said outer peripheral portion (211) of said bottom wall (21) ranges between 2 and 6 millimeters;
a minimum distance (D6) between said first bent segment (63) of said first blade body (6) and said surrounding wall (22) ranges between 1 and 6 millimeters; and
a minimum distance (D11) between said second bent segment (73) of said second blade body (7) and said surrounding wall (22) ranges between 1 and 6 millimeters.
